# EUROPÄISCHE PATENTSCHRIFT

(11) **EP 1 333 692 B1**
(45) Veröffentlichungstag und Bekanntmachung des Hinweises auf die Patenterteilung: **31.05.2006**
(21) Anmeldenummer: 02025850.5
(22) Anmeldetag: 19.11.2002
(51) Int. Cl.: H04Q 7/22, G01S 5/00

(54) **Kommunikationsgerät mit Instant Messenger Funktion**
Communication device having Instant Messenger function
Appareil de communication à fonction de messagerie instantanée

(30) Priorität: 01.02.2002 DE 10204135
(43) Veröffentlichungstag der Anmeldung: 06.08.2003
(73) Patentinhaber: ROBERT BOSCH GMBH, 70442 Stuttgart (DE)
(72) Erfinder: Vogel, Peter, 31139 Hildesheim (DE); Wildschuette, Florian, 31139 Hildesheim (DE)

(56) Entgegenhaltungen:
- EP-A- 0 899 704
- WO-A-00/22860
- DE-U- 29 822 488
- US-A1- 2001 048 364
- US-B1- 6 246 376

## Beschreibung

### Stand der Technik

Die Erfindung geht aus von einem Kommunikationsgerät nach der Gattung des unabhängigen Patentanspruchs.

Aus US 2001/048 364A1 ist es bekannt, dass mobile Endgeräte mit einem Datencenter, der Daten der mobilen Endgeräte speichert, kommunizieren. Endgeräte, die eine Überwachungsfunktion ausüben sollen, können die Position, Entfernung und Richtung anderer Endgeräte auf einem Display darstellen.

### Vorteile der Erfindung

Das erfindungsgemäße Kommunikationsgerät mit den Merkmalen des unabhängigen Patentanspruchs hat den Vorteil, daß durch eine Datenübertragung in Echtzeit mit einem weiteren Kommunikationsgerät eine sogenannte Instant-Messenger-Funktionalität im Fahrzeug realisiert wird. Dabei kann das Kommunikationsgerät im Radio oder dem Navigationsgerät oder einem anderen Telematikgerät installiert sein. Die Verbindung blockiert nicht dauerhaf Übertragungsbandbreite, da die Übertragung paketorientiert ist, also nur bei Bedarf Daten übertragen werden und nur dann die Übertragungsbandbreite ausgenutzt wird. Die Verbindung ist ständig zugriffsbereit.

Die Verbindung des Kommunikationsgeräts mit weiteren Kommunikationseinheiten ist hier sowohl physikalisch als auch logisch zu verstehen. D.h. dass die gegenüberliegende Kommunikationseinheit nicht notwendigerweise ein tatsächliches exisitierendes Gerät eines Nutzers darstellt. Es kann sich auch um eine reine softwaretechnisch realisierte Einheit handeln, die innerhalb eines Servers installiert ist, die keinem Nutzer zugeordnet ist und weitgehend automatisch arbeitet. Die Datenübertragung und/oder Darstellung können hier in Abhängigkeit von Ortskoordinaten durchgeführt werden, die durch eine Ortungsvorrichtung wie GPS (Global Positioning System) erzeugt werden. Die Verknüpfung mit den Ortskoordinaten verschafft dem Nutzer zusätzliche Informationen über den derzeitigen Aufenthaltsort festgelegter Teilnehmer, die über die Instant-Messenger-Funktionalität permanent mit ihm verbunden sind.

Weiterhin ist es möglich, automatisierte Nachrichten beim Erreichen bestimmter Zielgebiete bzw. Zielpunkte auszugeben.

Es ist damit möglich, die Anbindung an eine Offboard-Navigation zu schaffen. Die erfindungsgemäße Instant-Messenger-Funktionalität in Verbindung mit den Ortskoordinaten eignet sich in idealer Weise, um die Kommunikation zwischen Kraftfahrzeugen untereinander bzw. zwischen Kraftfahrzeugen und dem Internet herzustellen. Dabei können dann auch fest an das Internet angeschlossene Rechner, die stationär sind, in die Kommunikation einbezogen werden. Insbesondere für Speditionen bietet diese Möglichkeit ein ideales Werkzeug zum Flottenmanagement.

Durch die in den abhängigen Ansprüchen aufgeführten Maßnahmen und Weiterbildungen sind vorteilhafte Verbesserungen des im unabhängigen Patentanspruch angegebenen Kommunikationsgeräts möglich.

Besonders vorteilhaft ist, daß das erste Kommunikationsgerät über eine Funkschnittstelle, also insbesondere über Mobilfunk wie GPRS oder UMTS, mit wenigstens einem Server verbindbar ist, an den die Ortskoordinaten übertragen werden. Dieser Server dient dann als Zentrale, die die Daten über die angeschlossenen Teilnehmer sammelt. Von dem Server können dann Listen abgerufen werden, die im Fahrzeug ausgegeben werden können und die die angeschlossenen Teilnehmer beispielsweise in Abhängigkeit von den Ortskoordinaten darstellt.

Weiterhin ist es von Vorteil, dass das über die Instant-Messenger-Funktion verbundene zweite Kommunikationsgerät bzw. eine entsprechende logische Kommunikationseinheit in Abhängigkeit von den Ortskoordinaten des ersten und/oder zweiten Kommunikationsgeräts dargestellt wird.

Damit wird festgelegt, welche Teilnehmer innerhalb eines bestimmten Gebiets von dem ersten Kommunikationsgerät angezeigt werden. Die Regeln für die Ausgabe der Ortskoordinaten des zweiten Kommunikationsgeräts werden in einem Softwareelement im ersten Kommunikationsgerät festgelegt.

Darüber hinaus ist es von Vorteil, daß neben Ortskoordinaten noch wenigstens eine weitere, den Ortskoordinaten zugeordnete Information ausgebbar ist, beispielsweise ein Teilnehmername, wobei diese wenigstens eine weitere Information im wenigstens einen Server abgespeichert ist. Damit ist es möglich, zu den einzelnen Teilnehmern ein Profil im Server abzuspeichern, das dann an ein Kommunikationsgerät übertragen und dort angezeigt wird. Dies verschafft den Teilnehmern an dieser Kommunikation eine aktuellere Information über die über die Instant-Messenger-Funktion verbundenen anderen Teilnehmer.

Weiterhin ist es von Vorteil, daß das Kommunikationsgerät bzw. eine entsprechende logische Einheit auf einen Prozessor zugreifen kann, der eine Route zum Standort eines über die Instant-Messenger-Funktion verbundenen Kommunikationsgeräts bestimmt, wobei die Route mittels der Ausgabemittel, also einer Anzeige, angezeigt werden. Damit wird eine Navigationsfunktion mit integriert, um zu Teilnehmern zu gelangen, die an der Kommunikation teilnehmen.

Weiterhin ist es von Vorteil, daß das zweite Kommunikationsgerät, das also mit dem ersten Kommunikationsgerät über die Software, also die Instant-Messenger-Funktion, verbunden ist, beziehungsweise eine dem zweiten Kommunikationsgerät entsprechende, logische Kommunikationseinheit, einem Dienst zugeordnet ist. Unter diesem Dienst können öffentliche Dienste wie Polizei, Feuerwehrhilfsdienste oder auch Werkstätten oder ADAC verstanden werden. Über diese Kommunikationsfunktion des Softwareelements kann dabei eine textuelle oder sprachliche Kontaktierung vorgenommen werden. Insbesondere in Notfällen ermöglicht diese dauerhafte Echtzeitverbindung mit einem solchen Dienst ein hohes Maß an Sicherheit, was beispielsweise bei Unfällen oder auch Notsituationen wie Überfällen von großem Nutzen für den Nutzer sein kann.

Schließlich ist es auch von Vorteil, daß im wenigstens einen Server ein Profil abgelegt ist, das die Daten bestimmt, die zu dem ersten Kommunikationsgerät übertragen werden. Damit wird bestimmt, welche Nachrichten ein Teilnehmer, der an die Kommunikation angeschlossen ist, erhält. Beispielsweise bestimmte Verkehrsnachrichten, Wetternachrichten, Börsennachrichten oder auch nur Nachrichten von bestimmten Teilnehmern.

Weiterhin ist es von Vorteil, dass automatisch Ausgaben bzw. Ereignisse ausgelöst werden, sofern ein Kommunikationsgerät ein bestimmtes Gebiet erreicht. Dieses Gebiet kann lediglich als Koordinatenpaar oder auch als eine Fläche, die durch mehrere Koordinatenpaare definiert ist, angegben sein.

### Zeichnung

Ausführungsbeispiele der Erfindung sind in der Zeichnung dargestellt und werden in der nachfolgenden Beschreibung näher erläutert. Es zeigen Figur 1 ein Blockschaltbild des erfindungsgemäßen Navigationsgeräts, Figur 2 eine Kommunikation zwischen verschiedenen Teilnehmern und Figur 3 ein Flußdiagramm, das den Ablauf auf dem erfindungsgemäßen Kommunikationsgerät illustriert.

### Beschreibung

Die Internet-Kommunikation zwischen verschiedenen Rechnern erfolgt über die Adressierung einer IP-Adresse und den Transport von IP-Paketen gemäß dem TCP/IP-Protokoll. Über die korrekte Adressierung läßt sich prinzipiell jeder Rechner, der an das Internet angeschlossen ist, erreichen.

Instant Messenger sind Programme, mit denen Benutzer in Echtzeit untereinander Nachrichten bzw. Informationen austauschen können. Dazu müssen die zugehörigen Rechner ein Instant-Messenger-Programm, einen Client installiert haben sowie eine Verbindung zum Internet und anschließend zu einem Instant-Messenger-Server herstellen. Nach Herstellung dieser Verbindung sind die entsprechenden Clients zunächst über einen oder mehrere Server miteinander verbunden. Die Kommunikation zwischen zwei Teilnehmern läuft in der Regel direkt, d.h. Peer-to-Peer, und in Echtzeit ab. Die Teilnehmer, deren Online-Status und eventuell festgelegte individuelle Profile werden von einem oder mehreren Servern verwaltet.

Über das User-Interface des Clients kann der Benutzer festlegen, ob und wie er Kontakt zu anderen Teilnehmern aufnehmen möchte. Dazu hat er die Möglichkeit, sich eine Liste von Teilnehmern zu erstellen, deren Online-Status er sich anzeigen lassen möchte. Verschiedene Funktionen im Client erlauben unterschiedliche Kommunikationswege mit anderen Teilnehmern. Es können beispielsweise Textnachrichten oder e-mails verschickt, Chat-Anfragen und Sprachanrufe gestartet werden. Darüber hinaus kann man auch mit anderen Teilnehmern gemeinsam eine Gruppe zum Nachrichtenaustausch bilden, also einen Chat.

Die Entwicklung von Instant-Messenger-Systemen wurde von Festnetzrechnern aus betrieben, deren Standort statisch ist. Die Funktionsweise heutiger Messenger konzentriert sich daher auf die Interessen und Bedürfnisse von PC-Benutzern, die sich in das Festnetz einwählen.

Durch die Verbreitung des Mobilfunks und die Entwicklung der neuen Mobilfunkstandards GPRS und UMTS wird der Zugriff auf das Internet in Zukunft aber auch mobil möglich sein. Der spezielle Charakter dieser Mobilfunknetze erlaubt einen ständigen Online-Zugang (Allways On), bei dem nur die übertragene Datenmenge, nicht aber die Verbindungszeit bezahlt wird.

Erfindungsgemäß wird nun ein solcher Instant Messenger als Softwareelement in ein Kommunikationsgerät in einem Fahrzeug integriert, der eine Datenübertragung in Abhängigkeit von Ortskoordinaten durchführt. Das Kommunikationsgerät kann ein Autoradio oder Navigationsgerät oder ein Telematikgerät sein. Die Ortskoordinaten werden von einer Ortungsvorrichtung, beispielsweise mittels GPS, ermittelt. Die Ortskoordinaten werden vom Instant Messenger an einen Server versendet, der für jeden Benutzer den aktuellen Status, bestehend aus Verbindungsstatus, Ortskenndaten und anderen Daten, beispielsweise Geschwindigkeit, Fahrtrichtung, Beladung, freie Transportkapazitäten, verwaltet.

Im Instant Messenger Client gibt es mehrere Möglichkeiten, auf diese Daten zuzugreifen: So kann es für bestimmte Anwender sinnvoll sein, andere Teilnehmer über die Ortskoordinaten, bzw. den derzeitigen Standort, abzubilden, beispielsweise Speditionen. Die Darstellung im Instant Messenger Client kann sich daher vorteilhafterweise an den Koordinaten der Teilnehmer orientieren, so daß alle in der persönlichen Liste verzeichneten Teilnehmer in Abhängigkeit vom aktuellen Standort dargestellt werden. Die Darstellung kann schematisch in Gruppen, z.B. in Abhängigkeit von der Entfernung, oder dynamisch in einer Kartenform, z.B. in Verbindung mit der Navigation, erfolgen. Die Darstellung erfolgt ganz allgemein textuell oder graphisch, aber auch eine akustische Ausgabe ist hier möglich.

Des weiteren ist es denkbar, daß Teilnehmer erst dann im Instant Messenger Client dargestellt werden, wenn sie ein bestimmtes Zielgebiet erreicht haben oder wenn sie ein festgelegtes Gebiet verlassen haben. Bei Verwendung eines Navigationsgeräts kann man eine Funktionzielführung zu einem Teilnehmer der Liste realisieren. Das Navigationsgerät wird üblicherweise durch einen Prozessor, also einen Navigationsrechner, realisiert.

Es ist ebenfalls denkbar, daß in der Liste vorhandene Teilnehmer kein dediziertes Kommunikationsgerät mit zugehörigem Nutzer darstellen, sondern einen Server repräsentieren, der Informationen automatisch generiert, ein virtueller Client also.

Bei Eintreten bestimmter Ereignisse, z.B. zeitgesteuert oder das Kfz erreicht oder verläßt ein bestimmtes Gebiet, wird die entsprechende Information vom virtuellen Client erzeugt und an einen geeigneten Instant Messenger Client verschickt, beispielsweise Touristeninfos, Warnhinweise oder Verkehrsinformationen.

Dazu könnte man beispielsweise beim Instant Messenger Server ein Profil anlegen, in dem festgelegt wird, an welchen Informationen der jeweilige Teilnehmer interessiert ist. Für die Erzeugung entsprechender Nachrichten legt der IM-Server dann virtuelle Clients an, die die Nachrichten automatisch erzeugen. Der virtuelle Client erscheint später auf der persönlichen Teilnehmerliste. Darüber hinaus ist es auch denkbar, daß Textnachrichten für eine Offboard-Navigation eingesetzt werden, d.h. man übergibt dem IM-Server ein Profil mit Start und Ziel, woraufhin der Server einen virtuellen Client generiert, der regelmäßig Offboard-Navigationsanweisungen verschickt. Das Anlegen und Verwalten solcher virtueller Clients kann natürlich auch von unabhängigen Anbietern erfolgen.

Im Speditionswesen ist die Darstellung von Kfz einer Spedition oder eines festzulegenden Verbundes von Fahrzeugen hierdurch möglich. Bei Bedarf kann mit den Wagen dieses Verbundes unmittelbar Kontakt aufgenommen werden. Das Auslösen von Aktionen, wenn ein Fahrzeug der persönlichen Liste ein bestimmtes Zielgebiet erreicht hat oder ein Ursprungsgebiet verläßt, wird so automatisch erzeugt. Damit können die Empfänger einer Lieferung kurzfristig gewisse Vorbereitungen in die Wege leiten. Über Zusatzfunktionen im Client kann man sich anderen Kfz auch als Server bzw. Transportanbieter präsentieren. Über ein Profil werden die persönlichen Eigenschaften festgelegt, die an bestimmten Koordinaten abrufbar sind. Z.B. das Anbieten von freien Transportkapazitäten für bestimmte Transportrouten.

Auch die direkte, ortsabhängige Kommunikation stellt ein Beispiel für das erfindungsgemäße Kommunikationsgerät dar. Der Nutzer erstellt eine Liste, bestehend aus anderen Teilnehmern und erfährt über das Display des Autoradios oder Navigationsgeräts deren Online-Status und/oder deren Ortskoordinaten. Über Zusatzfunktionen können Textnachrichten ausgetauscht werden oder Voice-Calls gestartet werden. Bei Bedarf kann eine Zielführung zu einem der Teilnehmer gestartet werden. Unter Verwendung eines virtuellen Clients, dem Start und Ziel der Fahrt bekannt gemacht wurden, können Offboard-Navigationsanweisungen und/oder Verkehrsinformationen übertragen werden.

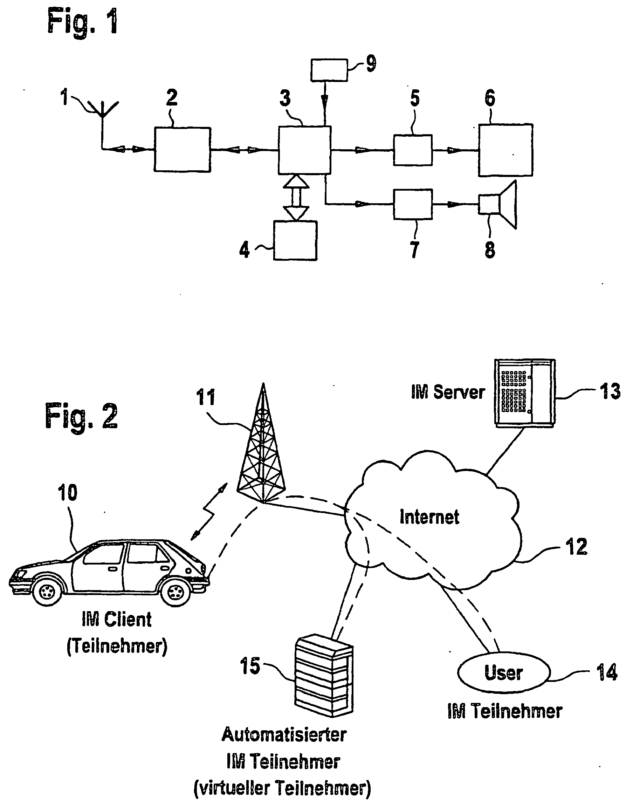

Figur 1 zeigt als Blockschaltbild das erfindungsgemäße Navigationsgerät. Eine Antenne 1 ist an einen Ein-/Ausgang eines Hochfrequenzempfängers 2 angeschlossen. Der Hochfrequenzempfänger 2 dient als Sende-/Empfangsstation für zu empfangende bzw. zu sendende Daten. Der Hochfrequenzempfänger 2 ist über einen Datenein-/ausgang mit einem Prozessor 3 verbunden, der die empfangenen Daten verarbeitet bzw. zu sendende Daten vorbereitet. Dazu verwendet der Prozessor 3 einen über einen zweiten Datenein-/ausgang angeschlossenen Speicher 4. Über einen ersten Dateneingang erhält der Prozessor 3 von einer Ortungsvorrichtung 9 die Ortskoordinaten des Kommunikationsgeräts. Die Ortungsvorrichtung 9 ist hier als GPS-Empfänger ausgebildet. Es sind jedoch auch andere Ortungsvorrichtungen möglich. Über einen ersten Datenausgang ist der Prozessor 3 mit einer Signalverarbeitung 5 verbunden, die eine Anzeige 6 ansteuert. Über einen zweiten Datenausgang ist der Prozessor 3 mit einer Audioansteuerung 7 verbunden, die einen Lautsprecher 8 ansteuert. Eingabemittel sind der Einfachheit halber hier nicht dargestellt, sind aber dennoch mit dem Prozessor 3 verbunden. Dazu zählen haptische Eingabemittel und/oder auch ein Mikrofon.

Das Kommunikationsgerät ist hier in einem Radio, einem Navigationsgerät oder einem anderen Telematikgerät, beispielsweise in Verbindung mit einem Mobilfunkgerät, vorhanden. Über die Antenne 1 und den Hochfrequenzempfänger 2, die eine paketorientierte Datenübertragung ermöglichen, wird eine Verbindung zu weiteren Teilnehmern ermöglicht. Das Softwareelement, das auf dem Prozessor 3 abläuft, also der Instant Messenger, sorgt für diese Verbindung, die eine Echtzeitkommunikation ermöglicht. Die Datenübertragung erfolgt dann in Abhängigkeit von den Ortskoordinaten, die selbst über die Antenne 1 und den Hochfrequenzempfänger 2 übertragen werden. Das Softwareelement auf dem Prozessor 3 ermöglicht, daß nicht nur ein, sondern auch mehrere andere Kommunikationsgeräte über die Instant-Messenger-Funktion mit dem erfindungsgemäßen Kommunikationsgerät verbunden sind. Jeder Teilnehmer oder Client erhält Informationen über die anderen Teilnehmer, oder logische Kommunikationseinheiten (virtuelle Clients). Die Informationen sind in einem Server abgespeichert, der auch die aktuellen Ortskoordinaten der einzelnen Teilnehmer abspeichert. Ein solcher Verbund ist beispielsweise eine Flotte eines Speditionsunternehmens.

Die Informationen können mit der Anzeige 6 bzw. dem Lautsprecher 8 wiedergegeben werden. Der Prozessor 3 kann auch als Rechner für eine Navigation verwendet werden, wobei hier auch ein weiterer Prozessor anschließbar ist. Die Navigation kann auch über einen externen Rechner erfolgen, der über die Funkschnittstelle mit dem Kommunikationsgerät verbunden ist. Die Routenberechnung erfolgt hier zu einem der Teilnehmer, die über den Instant Messenger mit dem Kommunikationsgerät verbunden sind.

Figur 2 zeigt ein Szenario, wie ein Kommunikationsgerät in einem Fahrzeug 10 über eine Funkschnittstelle mit einer Basisstation 11 verbunden ist, die an das Internet 12 angeschlossen ist. Über das Internet 12 sind ein Instant Messenger Server 13, ein Instant-Messenger-Teilnehmer 14 und ein automatisierter Instant-Messenger-Teilnehmer, also ein virtueller Teilnehmer, mit dem Fahrzeug 10 verbunden. Der Instant Messenger im Fahrzeug 10 ermöglicht die Echtzeitverbindung mit dem Server 13, dem Teilnehmer 15 und dem Teilnehmer 14. Im Server 13 sind die Profile der Teilnehmer dieser Kommunikation abgelegt, also des Fahrzeugs 10, des Teilnehmers 14 und des Teilnehmers 15. Der automatisierte Teilnehmer 15 erzeugt in Abhängigkeit von den Ortskoordinaten des Teilnehmers 10 Daten, die er an den Teilnehmer 10 überträgt.

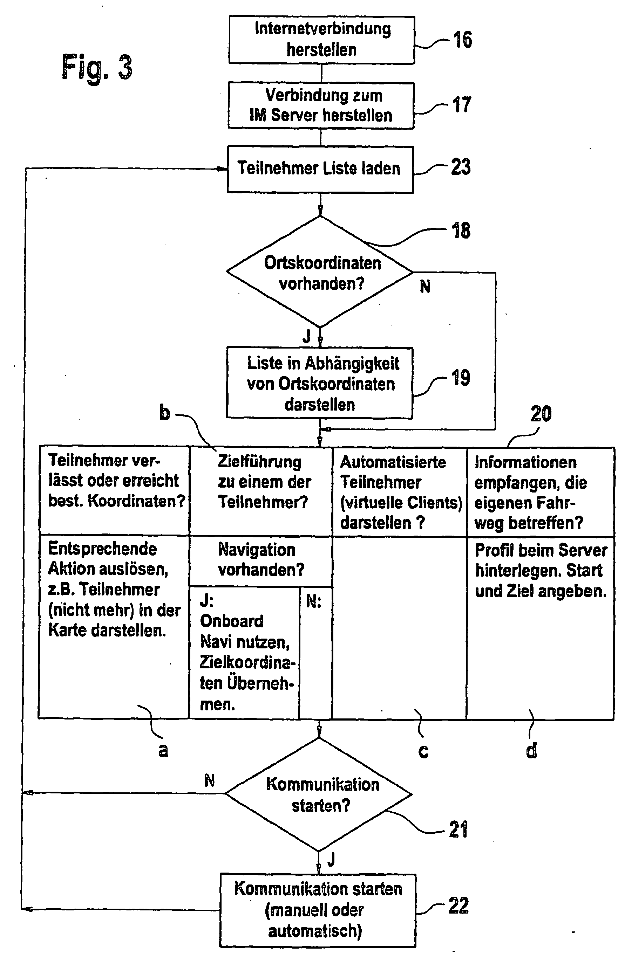

Figur 3 zeigt ein Flußdiagramm des Ablaufs, der im erfindungsgemäßen Kommunikationsgerät abläuft. In Verfahrensschritt 16 wird die Internetverbindung über die Funkschnittstelle mittels der Antenne 1 und des Hochfrequenzempfängers 2 hergestellt. In Verfahrensschritt 17 erfolgt dann die Herstellung der Verbindung über das Internet 12 zum Server 13. In Verfahrensschritt 23 lädt der Teilnehmer 10 die Liste der bereits existierenden Teilnehmer, also des Servers 13, des Teilnehmers 14 und des Teilnehmers 15. In Verfahrensschritt 18 wird überprüft, ob Ortskoordinaten anderer Teilnehmer vorhanden sind. Ist das nicht der Fall, dann wird direkt zu Verfahrensschritt 20 gesprungen. Ist das jedoch der Fall, dann wird in Verfahrensschritt 19 die Liste in Abhängigkeit von Ortskoordinaten dargestellt. D.h. daß gegebenenfalls nicht alle Teilnehmer dargestellt werden oder zumindest die Teilnehmer in Abhängigkeit von der Entfernung, also nähere Teilnehmer werden besonders hervorgehoben und weiter entfernte Teilnehmer entsprechend weniger.

In Verfahrensschritt 20 kommt es zu einer Fallunterscheidung zwischen den Fällen A, B, C und D. Im Fall A wird ein Teilnehmer, der an der Kommunikation teilnimmt und der entsprechende Koordinaten erreicht, nicht mehr dargestellt. Im Fall B erfolgt eine Zielführung zu einem der Teilnehmer 14 oder 15. Ist eine Navigation vorhanden, wird eine Onboard-Navigation genutzt und die Zielkoordinaten werden dabei übernommen. Ist keine Navigation vorhanden, bietet sich die Option der Offboard-Navigation an, ansonsten muß dies manuell geschehen. Im Fall C wird überprüft, ob auch automatisierte Teilnehmer, also virtuelle Clients, vorhanden sind.

Gemäß Figur 2 ist hier solch ein virtueller Client vorhanden. Virtuelle Teilnehmer können über den Server 13 ausgewählt oder selbst definiert werden, beispielsweise im Kommunikationsgerät des Teilnehmers 10 selbst. Auch Optionen können dabei ausgewählt werden, z.B. welche Informationen wann und wo empfangen werden. Im Fall D werden Informationen, die den eigenen Fahrweg betreffen, ausgegeben. Mittels eines Profils beim Server 13 erfolgt die Auswahl. Start und Ziel sind dabei auch angegeben. Nach Verfahrensschritt 20 wird zu Verfahrensschritt 21 gesprungen, der überprüft, ob eine Kommunikation gestartet werden soll. Ist das nicht der Fall, wird zu Verfahrensschritt 23 zurückgesprungen. Ist das jedoch der Fall, dann wird in Verfahrensschritt 22 die Kommunikation manuell oder automatisch gestartet.

## Patentansprüche

1. Erstes Kommunikationsgerät, das in einem Fahrzeug angeordnet ist, wobei das erste Kommunikationsgerät (10) mit einer Ortungsvorrichtung (9) verbunden ist, die Ortskoordinaten des ersten Fahrzeugs erzeugt, wobei das erste Kommunikationsgerät (10) Mittel zur Aussendung der Ortskoordinaten (1, 2) aufweist, wobei ein Server (13) die empfangenen Ortskoordinaten auswertet und in Abhängigkeit von den Ortskoordinaten eine Ausgabe von Informationen an das erste Kommunikationsgerät (10) auslöst, **dadurch gekennzeichnet, dass** das erste Kommunikationsgerät (10) in einer Liste verzeichnete Teilnehmer in Abhängigkeit von seinem Standort in eine Karte darstellt und wobei der Nutzer des ersten Kommunikationsgeräts (10) auf Basis der dargestellten Karte wenigstens einen Teilnehmer mit einem zweiten Kommunikationsgerät (14) auswählt, mit dem er, mittels Softwareelement paketorientiert über eine Funk-Datenübertragung in Echtzeit direkt kommuniziert.

2. Kommunikationsgerät nach Anspruch 1, **dadurch gekennzeichnet, dass** das erste Kommunikationsgerät (10) über eine Funkschnittstelle (1, 2) mit wenigstens einem Server (13) verbunden ist, an den die Ortskoordinaten und in Abhängigkeit von im ersten Kommunikationsgerät vorhandene Daten weitere Informationen, insbesondere Fahrzeugdaten, übertragen und im Server (13) gespeichert werden.

3. Kommunikationsgerät nach Anspruch 1 oder 2, **dadurch gekennzeichnet, dass** die Ortskoordinaten als die Informationen des mittels des Softwareelements verbundenen, wenigstens einen zweiten Kommunikationsgeräts (14) oder einer entsprechenden logischen Kommunikationseinheit mittels eines Ausgabemittels (6, 8),das mit dem ersten Kommunikationsgerät (10) verbunden ist, ausgebbar sind.

4. Kommunikationsgerät nach Anspruch 3, **dadurch gekennzeichnet, dass** neben Ortskoordinaten noch die den Ortskoordinaten zugeordneten Informationen, insbesondere Fahrzeugdaten, ausgebbar ist, wobei die Informationen in wenigstens einem Server (13) abgespeichert sind und/oder direkt vom wenigstens einen zweiten Kommunikationsgerät (14) oder der entsprechenden logischen Kommunikationseinheit übertragen werden.

5. Kommunikationsgerät nach Anspruch 4, **dadurch gekennzeichnet, dass** das erste Kommunikationsgerät (10) das zweite Kommunikationsgerät (14) über seine im Server (13) abgespeicherten Ortskoordinaten und/oder weiteren Informationen manuell oder automatisch auswählt und Daten sendet und/oder eine Kommunikation mit dem zweiten Kommunikationsgerät startet.

6. Kommunikationsgerät nach Anspruch 1, **dadurch gekennzeichnet, dass** das erste Kommunikationsgerät (10) mit einem Prozessor (3) verbunden ist, der eine Route zum Standort des wenigstens einen zweiten Kommunikationsgeräts (14) bestimmt, wobei die Route mittels Ausgabemitteln (6, 8) angezeigt wird.

7. Kommunikationsgerät nach einem der vorhergehenden Ansprüche, **dadurch gekennzeichnet, dass** das wenigstens eine zweite Kommunikationsgerät (14) einem Dienst zugeordnet ist.

8. Kommunikationsgerät nach einem der Ansprüche 1 bis 7, **dadurch gekennzeichnet, dass** in wenigstens einem Server ein Profil abgelegt ist, das die Daten bestimmt, die zu dem ersten Kommunikationsgerät übertragen werden.

## Claims

1. First communication appliance arranged in a vehicle, where the first communication appliance (10) is connected to a position-finding apparatus (9) which produces location coordinates for the first vehicle, where the first communication appliance (10) has means for transmitting the location coordinates (1, 2), and where a server (13) evaluates the received location coordinates and takes the location coordinates as a basis for outputting information to the first communication appliance (10), **characterized in that** the first communication appliance (10) shows subscribers recorded in a list in a map on the basis of its location, and where the user of the first communication appliance (10) takes the map shown as a basis for selecting at least one subscriber with a second communication appliance (14) with which he communicates directly in real time using a software element by means of radio data transmission on a packet-oriented basis.

2. Communication appliance according to Claim 1, **characterized in that** the first communication appliance (10) is connected by means of a radio interface (1, 2) to at least one server (13) to which the location coordinates and, on the basis of data available in the first communication appliance, further information, particularly vehicle data, are transmitted and are stored in the server (13).

3. Communication appliance according to Claim 1 or 2, **characterized in that** the location coordinates can be output as the information from the at least one second communication appliance (14) connected by means of the software element or from a corresponding logical communication unit using an output means (6, 8) which is connected to the first communication appliance (10).

4. Communication appliance according to Claim 3, **characterized in that** besides location coordinates it is also possible to output the information, particularly vehicle data, associated with the location coordinates, the information being stored in at least one server (13) and/or being transmitted directly by at least one second communication appliance (14) or the corresponding logical communication unit.

5. Communication appliance according to Claim 4, **characterized in that** the first communication appliance (10) manually or automatically selects the second communication appliance (14) using its location coordinates stored in the server (13) and/or other information and sends data and/or starts communication with the second communication appliance.

6. Communication appliance according to Claim 1, **characterized in that** the first communication appliance (10) is connected to a processor (3) which determines a route to the location of the at least one second communication appliance (14), the route being indicated by means of output means (6, 8).

7. Communication appliance according to one of the preceding claims, **characterized in that** the at least one second communication appliance (14) is associated with a service.

8. Communication appliance according to one of Claims 1 to 7, **characterized in that** at least one server stores a profile which determines the data which are transmitted to the first communication appliance.

## Revendications

1. Premier appareil de communication dans un véhicule, le premier appareil de communication (10) étant relié à un dispositif de localisation (9) qui génère des coordonnées de lieu du premier véhicule, le premier appareil de communication (10) présentant des moyens d'émission des coordonnées de lieu (1, 2), un serveur (13) exploitant les coordonnées de lieu reçues et déclenchant, en fonction des coordonnées de lieu, une émission d'informations vers le premier appareil de communication (10),
**caractérisé en ce que**
le premier appareil de communication (10) représente dans une liste un participant répertorié en fonction de son lieu de situation dans une carte et l'utilisateur du premier appareil de communication (10) sélectionne, sur la base de la carte représentée, au moins un participant ayant un deuxième appareil de communication (14), avec lequel il communique directement en temps réel au moyen d'un élément logiciel par paquets de données via une transmission de données radio.

2. Appareil de communication selon la revendication 1,
**caractérisé en ce que**
le premier appareil de communication (10) est relié par au moins une interface radio (1, 2) à au moins un serveur (13) auquel sont transmises les coordonnées de lieu ainsi que, en fonction des données présentes dans le premier appareil de communication, d'autres informations, en particulier des données relatives au véhicule, toutes ces informations étant ensuite enregistrées dans le serveur (13).

3. Appareil de communication selon la revendication 1 ou 2,
**caractérisé en ce que**
les coordonnées de lieu peuvent être émises à l'aide d'un moyen d'émission (6, 8) relié au premier appareil de communication (10), en tant qu'informations de l'au moins un deuxième appareil de communication (14) relié au moyen de l'élément logiciel ou d'une unité de communication logique correspondante.

4. Appareil de communication selon la revendication 3,
**caractérisé en ce qu'**
en plus des coordonnées de lieu, les informations associées aux coordonnées de lieu, en particulier les données relatives au véhicule, peuvent être émises, les informations étant enregistrées dans au moins un serveur (13) et/ou étant directement transmises à partir d'au moins un deuxième appareil de communication (14) ou de l'unité de communication logique correspondante.

5. Appareil de communication selon la revendication 4,
**caractérisé en ce que**
le premier appareil de communication (10) sélectionne manuellement ou automatiquement le deuxième appareil de communication (14) par le biais de ses coordonnées de lieu enregistrées dans le serveur (13) et/ou d'autres informations, et envoie des données au deuxième appareil de communication et/ou débute une communication avec celui-ci.

6. Appareil de communication selon la revendication 1,
**caractérisé en ce que**
le premier appareil de communication (10) est relié à un processeur (3) qui détermine un itinéraire vers le lieu de résidence du deuxième appareil de communication (14), l'itinéraire étant indiqué à l'aide de moyens d'émission (6, 8).

7. Appareil de communication selon l'une des revendications précédentes,
**caractérisé en ce que**
le deuxième appareil de communication (14) est associé à un service.

8. Appareil de communication selon l'une des revendications 1 à 7,
**caractérisé en ce que**
dans au moins un serveur est enregistré un profil qui détermine les données transmises au premier appareil de communication.
